# EUROPEAN PATENT SPECIFICATION

(11) **EP 4 300 435 B1**
(45) Date of publication and mention of the grant of the patent: **26.08.2026**
(21) Application number: 22305979.1
(22) Date of filing: 01.07.2022
(51) Int. Cl.: G06V 10/82, G06V 10/774, G06V 20/40

(54) **MOTION REPRESENTATION CALCULATION METHOD AND SYSTEM, TRAINING METHOD, COMPUTER PROGRAM, READABLE MEDIUM AND SYSTEM**
BEWEGUNGSDARSTELLUNGSBERECHNUNGSVERFAHREN UND - SYSTEM, TRAININGSVERFAHREN, COMPUTERPROGRAMM, LESBARES MEDIUM UND SYSTEM
PROCÉDÉ DE CALCUL DE REPRÉSENTATION DE MOUVEMENT ET SYSTÈME, PROCÉDÉ D'APPRENTISSAGE, PROGRAMME INFORMATIQUE, SUPPORT LISIBLE ET SYSTÈME

(43) Date of publication of application: 03.01.2024
(73) Proprietor: TOYOTA JIDOSHA KABUSHIKI KAISHA, Aichi-Ken 471-8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); YANG, Di, 06902 VALBONNE (FR); WANG, Yaohui, 06902 VALBONNE (FR); BREMOND, François, 06902 VALBONNE (FR)
(74) Representative: Cabinet Beau de Loménie

(56) References cited:
- US-B1- 10 911 775
- DAS SRIJAN ET AL: "Toyota Smarthome: Real-World Activities of Daily Living", 2019 IEEE/CVF INTERNATIONAL CONFERENCE ON COMPUTER VISION (ICCV), IEEE, 27 October 2019 (2019-10-27), pages 833 - 842, XP033723065, DOI: 10.1109/ICCV.2019.00092

## Description

### FIELD OF THE DISCLOSURE

The present disclosure is related to methods and systems for generating view- and subject- invariant representations of the motion of a person. The present disclosure further encompasses methods and systems for performing a motion-based 'downstream task', a motion-based task being herein a prediction task of predicting some information which is essentially based on a motion of the person.

Importantly, in the present document, the term 'person' refers broadly to any being who has a skeleton, and whose movements or motion consequently are essentially defined by the motion of its skeleton.

Accordingly, a person can be a human being or an animal having a skeleton; it can also be a machine such as a robot which has an articulated body. In all cases, a person has a skeleton, which means that the position of his, her or its body is essentially defined by the position of joints linking the different segments of his, her or its skeleton.

### BACKGROUND OF THE DISCLOSURE

When a machine, for instance a robot, has to interact with a person, it is in many cases useful or even necessary for the machine to determine the action that the person is doing.

Various systems have been developed to perform such function.

Document US 10 911 775 B1 concerns methods, systems and user experiences associated with image-based predictions in an environment.

Many of these systems, as input, use data showing the successive positions of the skeleton of the person over time: This data, also called skeleton sequence, is a proxy or summarized information which efficiently represents the motion of the person.

Now, the number of skeleton sequences which can represent the same action being performed by the person is infinite. This is because in particular the skeleton sequence not only includes information which relates to the action performed by the person, but also includes a lot of information which conversely is completely irrelevant with respect to the motion of the person. For this reason, it is quite difficult to predict the action being performed the person based on a skeleton sequence.

Despite that difficulty, many systems, and in particular the systems disclosed by documents [1], [2] and [3] listed below, have obtained quite promising performances to identify actions performed by a person.

However, these systems exhibit limitations or drawbacks.

The system proposed by document [1] has to be trained on annotated data. Therefore, it is difficult and/or costly to train that system.

The system proposed by document [2] has quite interesting performances for data similar to the data on which it was trained, but appears unable to generalize to different environments. It appears incapable in particular to produce exploitable results based on 2D skeleton sequences obtained based on real-world acquisitions.

In addition, the systems proposed by documents [1] and [2] struggle in improving downstream action recognition tasks with 2D skeleton datasets as such techniques do not have specific designs targeting the view variance.

The system proposed by document [3] has to be trained (at least in a pre-training phase) based either on 3D skeleton sequences, or on multi-view 2D skeleton sequences, which is quite constraining.

Document [3] focuses on view-invariant single 2D skeleton embeddings, which are challenged for capturing the temporal features of the sequence.

Therefore, there is a need for a method or system which can be used to determine actions that a person is doing, which can be trained on readily available data, and which if possible generalizes well to data substantially different from the data on which the method/system has been initially trained.

### References:

[1] Di Yang, Yaohui Wang, Antitza Dantcheva, Lorenzo Garattoni, Gianpiero Francesca, and Francois Bremond. Unik: A unified framework for real-world skeleton-based action recognition. BMVC, 2021.
[2] Linguo Li, Minsi Wang, Bingbing Ni, Hang Wang, Jiancheng Yang, and Wenjun Zhang. 3d human action representation learning via cross-view consistency pursuit. In CVPR, 2021.
[3] Jennifer J. Sun, Jiaping Zhao, Liang-Chieh Chen, Florian Schroff, Hartwig Adam, and Ting Liu. View-invariant probabilistic embedding for human pose. In ECCV, 2020.
[4] Srijan Das, Rui Dai, Michal Koperski, Luca Minciullo, Lorenzo Garattoni, Francois Bremond, and Gianpiero Francesca. Toyota smarthome: Real-world activities of daily living. In ICCV, 2019.
[5] Tianjiao Li, Jun Liu, Wei Zhang, Yun Ni, Wenqian Wang, and Zhiheng Li. Uav-human: A large benchmark for human behavior understanding with unmanned aerial vehicles. In CVPR, 2021.
[6] Liu, Z., Zhang, H., Chen, Z., Wang, Z., Ouyang, W.: Disentangling and unifying graph convolutions for skeleton-based action recognition. In CVPR, 2020.
[7] T. S. Kim and A. Reiter. Interpretable 3D human action analysis with temporal convolutional networks. In CVPRW, 2017.
[8] S. Yan, Yuanjun Xiong, and D. Lin. Spatial temporal graph convolutional networks for skeleton-based action recognition. AAAI, 2018.
[9] Lei Shi, Yifan Zhang, Jian Cheng, and Hanqing Lu. Two-stream adaptive graph convolutional networks for skeleton-based action recognition. In CVPR, 2019.
[10] Yi-Fan Song, Zhang Zhang, Caifeng Shan, and Liang Wang. Stronger, faster and more explainable: A graph convolutional baseline for skeleton-based action recognition. In ACM MM, 2020.
[11] Ziyu Liu, Hongwen Zhang, Zhenghao Chen, Zhiyong Wang, and Wanli Ouyang. Disentangling and unifying graph convolutions for skeleton-based action recognition. In CVPR, 2020.
[12] Jennifer J. Sun, Jiaping Zhao, Liang-Chieh Chen, Florian Schroff, Hartwig Adam, and Ting Liu. View-invariant probabilistic embedding for human pose. In ECCV, 2020.
[13] Di Yang, Yaohui Wang, Antitza Dantcheva, Lorenzo Garattoni, Gianpiero Francesca, and Francois Bremond. Self-supervised video pose representation learning for occlusion-robust action recognition. FG, 2021.
[14] Linguo Li, Minsi Wang, Bingbing Ni, Hang Wang, Jiancheng Yang, and Wenjun Zhang. 3d human action representation learning via cross-view consistency pursuit. In CVPR, 2021.
[15] Ke Cheng, Yifan Zhang, Xiangyu He, Weihan Chen, Jian Cheng, and Hanqing Lu. Skeleton-based action recognition with shift graph convolutional network. In CVPR, 2020.
[16] Jennifer J. Sun, Jiaping Zhao, Liang-Chieh Chen, Florian Schroff, Hartwig Adam, and Ting Liu. View-invariant probabilistic embedding for human pose. In ECCV, 2020.
[17] W. Zhang, M. Zhu, and K. G. Derpanis. From actemes to action: A strongly-supervised representation for detailed action understanding. In ICCV, 2013.
[18] Vaswani, Ashish, Shazeer, Noam, Parmar, Niki, et al. Attention is all you need. Advances in neural information processing systems, 2017, vol. 30.

### SUMMARY OF THE DISCLOSURE

The methods and systems according to the present disclosure have been conceived in order to address the above concern.

A first aspect of the present disclosure is a computer-implemented method for calculating a motion representation representing a motion of a person, based on a skeleton sequence representing a motion of a skeleton of the person, the method comprising:
S210) based on the skeleton sequence, calculating a motion representation with a motion encoder trained with one of the training methods which are presented below.

Indeed, it has been found that a calculating a properly calculated motion representation can be a very efficient 'upstream task', or base task, which outputs a datum, the motion representation, which constitutes an excellent starting point to then calculate or extract relevant information about the motion of the person shown in the skeleton sequence.

Specifically, thanks to the training methods described below, such motion representation can be a datum which contains most of the information of the skeleton sequence which relates to the motion of the person, but conversely without including the other information, that is, information related to the viewpoint relative to the person, to the personal features of the person (size, etc.), etc. In the training methods described below, this other information is actually stored in another representation, the 'character representation', which can also be extracted from the skeleton sequence using a character encoder, as it will be explained below.

Thanks to this feature, the motion representation can be used efficiently as an input to perform various motion-based tasks, called herein downstream tasks, simply by coupling a decoder (called herein 'downstream task decoder') downstream the motion encoder.

Herein, a motion-based task, with respect to a motion of a person over a time period, is any prediction task in which a datum which essentially depends on the motion of the person during the considered time period is predicted. The motion-based task, or downstream task, may be for instance action classification, that is, classifying the action performed by the person shown in the skeleton sequence among a list of predetermined action classes such as 'walking', 'running', 'reading', 'boxing', etc.

For example, the motion-based task can be the action of localization and segmentation (frame-level classification), in untrimmed videos; 2D-to-3D human pose estimation, in videos; or also video alignment.

In addition, motion-based tasks can also be, for instance: action recognition, cross-view action recognition (in which the system is trained using sequences with a first point of view, then at inference the sequences are acquired from another point of view); 2D- or 3D- pose estimation; in particular, predicting motion representation in 2D, then predicting 3D-poses.

Accordingly, a second aspect of the disclosure is more broadly a computer-implemented method for carrying out a motion-based task based on a skeleton sequence representing a motion of a skeleton of the person over a time period, the method comprising:
S210) based on the skeleton sequence, calculating a motion representation with a Motion Encoder;
S220) based on the motion representation, outputting a prediction with a downstream task decoder;
the motion encoder and the downstream task decoder being trained to perform the motion-based task using one of the training methods which are presented below.

When the skeleton sequence is obtained based on a sequence of images, the above method may of course comprise an initial step S200 of:
S200) calculating the skeleton sequence based on the sequence of images.

For the methods defined above to output satisfactory results, the motion encoder, and as the case may be the downstream task decoder, have to be trained appropriately.

In this purpose, first, the following training methods are proposed to train the motion encoder and/or the character encoder.

According to a third aspect, the following computer-implemented training method is proposed. This method is a method for training a motion encoder to calculate a motion representation representing a motion of a person, based on a skeleton sequence representing a motion of a skeleton of the person, and/or for training a character encoder to calculate a character representation representing a character of the person, based on the skeleton sequence. In this method, the motion encoder comprises a plurality of motion encoder blocks, configured to extract respectively spatial and temporal multi-scale features of skeleton sequences; a character encoder is a convolutional neural network comprising a plurality of 1D temporal convolutional layers; a pose sequence decoder is a convolutional neural network comprising at least three 1D temporal convolutional layers connected downstream with an upsampling block, to reconstruct the skeleton sequence.

The character encoder is preferably a convolutional neural network comprising at least four 1D temporal convolutional layers, each 1D temporal convolutional layer being followed by a temporal global max pooling layer, the 1D temporal convolutional layers being connected downstream with an upsampling block configured to output a representation having the same size along a temporal dimension as the motion representation.

The method comprises performing iteratively the following steps:
S11) based on a first initial skeleton sequence, calculating a first primary motion representation with the Motion Encoder and calculating a first primary character representation with the Character Encoder;
S12) based on a second initial skeleton sequence different from the first initial skeleton sequence, calculating a second primary motion representation with the Motion Encoder and calculating a second primary character representation with the Character Encoder;
S21) based on the first primary motion representation and the second primary character representation, calculating a first primary (retargeted) skeleton sequence with the pose sequence decoder;
S22) based on the second primary motion representation and the first primary character representation, calculating a second primary (retargeted) skeleton sequence with the pose sequence decoder;
S31) based on the first primary skeleton sequence, calculating a first secondary motion representation with the motion encoder and calculating a first secondary character representation with the character encoder;
S32) based on the second primary skeleton sequence, calculating a second secondary motion representation with the motion encoder and calculating a second secondary character representation with the Character Encoder;
S41) based on the first secondary motion representation and the second secondary character representation, calculating a first secondary (retargeted) skeleton sequence with the pose sequence decoder;
S42) based on the second secondary motion representation and the first secondary character representation, calculating a second secondary (retargeted) skeleton sequence with the pose sequence decoder;
S60) updating parameters of at least the motion encoder and/or the character encoder so as to minimize differences between the first initial skeleton sequence and the first secondary skeleton sequence.

Various architectures may be used for the motion encoder.

For instance, in some embodiments each motion encoder block comprises at least a Spatial Long-short Dependency learning Unit and a Temporal Long-short Dependency learning Unit.

An S-LSU is a functional unit configured to extract spatial features of skeleton sequences. In this purpose, an S-LSU usually contains convolutional layers and a multi-head attention mechanism in the spatial dimension (A multi-head attention mechanism is disclosed by Ref.[18]).

A T-SLU is a functional unit configured to extract temporal features of skeleton sequences. In this purpose, a T-LSU usually contains multiple temporal convolutional layers.

In some embodiments, the training method comprises, during at least one of retargeting steps S21, S22, S41 and S42, concatenating a motion representation and a character representation.

In some embodiments, the training method further comprises a step S10:
S10) identifying the first initial skeleton sequence and the second initial skeleton sequence (the sequences to be used at step S11) so that a distance between first initial skeleton sequence and the second initial skeleton sequence be above a threshold or be likely above a threshold.

Indeed, by selecting the first and second initial skeleton sequences in this manner, the efficiency of the training can be improved.

In order to carry out step S10, in some embodiments, at step S10, a clustering step is performed so as to group the skeleton sequences of the training dataset in clusters. Then, the first and the second initial skeleton sequences may be chosen, for instance, as two skeleton sequences which do not belong to the same cluster. By doing so, the first and the second initial skeleton sequences are selected so that the distance between them is above a threshold or at least, is likely (or probably) above a threshold.

In some embodiments, the training method further comprises steps of:
S43) based on the first primary motion representation and the first primary character representation, calculating a first reconstructed skeleton sequence;
S44) based on the second primary motion representation and the second primary character representation, calculating a second reconstructed skeleton sequence; and
wherein during the update step S60, the parameters of the motion encoder, of the character encoder, and/or of the pose sequence decoder are updated so as to minimize differences, for at least one of the initial skeleton sequences, between the initial skeleton sequence and the corresponding reconstructed skeleton sequence.

Many loss functions can be used in order to update the parameters at step S60.

In some embodiments, during the update stepS60, the parameters of the motion encoder, of the character encoder and/or of the pose sequence decoder are updated so as to minimize differences:
- between the first primary motion representation and the first secondary motion representation;
- between the second primary motion representation and the second secondary motion representation;
- between the first primary character representation and the first secondary character representation; and/or
- between the second primary character representation and the second secondary character representation.

In some embodiments, during the update step S60, the parameters of the motion encoder, of the character encoder, and/or of the pose sequence decoder are updated so as to maximize differences:
- between the first primary motion representation and the second secondary motion representation;
- between the second primary motion representation and the first secondary motion representation;
- between the first primary character representation and the second secondary character representation; and/or
- between the second primary character representation and the first secondary character representation.

In some embodiments, each one of the initial skeleton sequences comprises joints; and during the update step S60, the parameters of the motion encoder, of the character encoder, and/or of the pose sequence decoder are updated so as to minimize at least a summation of differences between a speed of a joint of an initial skeleton sequence and a speed of the corresponding joint of a corresponding calculated secondary skeleton sequence.

In some embodiments, the motion encoder is configured to calculate a 2D- or a 3D- representation of motion-related features of a skeleton sequence, based on a 2D-skeleton sequence or a 3D-skeleton sequence. In a particularly interesting implementation, 2D-representations of motion-related features of a skeleton sequence are generated based on 2D-skeleton sequences. In this case, obtaining 3D skeleton sequences, which may be complex, is unnecessary.

In some embodiments, a second training phase is performed to fine-tune the values of the parameters of at least the motion encoder, and optionally the character encoder and/or the pose sequence decoder.

Accordingly, the following computer-implemented training method for training a motion encoder is proposed. This method is a method for training a motion encoder to calculate a motion representation representing a motion of a person in a skeleton sequence based on the skeleton sequence, and optionally to train a downstream task decoder to perform a motion-based task based on said motion representation, wherein,
the motion encoder comprises a plurality of blocks, configured to extract respectively spatial and temporal multi-scale features of skeleton sequences; a character encoder is a convolutional neural network comprising at least four 1D temporal convolutional layers, each 1D temporal convolutional layer being followed by a temporal global max pooling layer (to encode the skeleton sequence to the character representation), the 1D temporal convolutional layers being connected downstream with an upsampling block configured to output a representation having the same size along a temporal dimension as the motion representation (for instance, to facilitate concatenation); a pose sequence decoder is a convolutional neural network comprising at least three 1D temporal convolutional layers with upsampling process to reconstruct the skeleton sequence; and a downstream task decoder being a neural network configured to perform the motion-based task;
the training method comprises
   A) training the motion encoder by implementing one of the training methods defined above;
   B) fine-tuning the motion encoder by:
      S110) based on a skeleton sequence, calculating a motion representation with the motion encoder;
      S150) based on the motion representation, outputting a prediction with the downstream task decoder;
      S160) updating parameters of at least the motion encoder so as to minimize differences between the prediction and a ground truth datum corresponding to the skeleton sequence.

In some embodiments, the motion-based downstream task is action classification.

In particular implementations, the proposed methods are determined by computer program instructions.

Accordingly, another purpose the present disclosure is to propose one or more computer program(s) comprising instructions which, when the instructions are executed by one or more processor(s), cause the computer to carry out the steps of one of the above-defined methods, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more computer program(s) defined above stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a system comprising one or more processor(s) and a non-transitory computer readable medium as presented above.

This system may for instance be a downstream task performance system, configured to perform the downstream task based on skeleton sequences.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Fig.1 is a schematic view showing a system according to the present disclosure, represented during the acquisition of an image of a person;
Fig.2 is a schematic view showing embedding and retargeting steps performed in a training method according to the present disclosure ;
Fig.3 is a schematic view showing an evaluation step performed to evaluate a training method according to the present disclosure;
Fig.4 is a schematic view showing data processing steps performed to calculate a motion representation representing a motion of a person or to perform a motion-based task, in accordance with the present disclosure;
Fig.5 is a schematic representation of part of the architecture of a model used to implement methods according to the present disclosure;
Fig.6 is a schematic representation of the architecture of the motion encoder of the model of Fig.5;
Fig.7 is a schematic representation of the architecture of a character encoder of the model of Fig.5;
Fig.8 is a a schematic representation of the architecture of a pose sequence decoder of the model of Fig.5;
Fig.9 is a a schematic representation of the architecture of a pose sequence decoder of the model of Fig.5; and
Fig.10 is a schematic view showing data processing steps performed in a main training phase and a fine-tuning phase of a training method according to the present disclosure;.

### DESCRIPTION OF THE EMBODIMENTS

Methods and systems capable of calculating representations representing a motion of a person, based on a skeleton sequence representing a motion of the skeleton of the person, are now going to be presented, as well as methods and systems configured to perform a downstream task based on such motion representations.

A skeleton sequence representing the motion of the skeleton of the person may be acquired by any method. A skeleton sequence may be a 2D-skeleton sequence, in which the positions of the joints of the skeleton are represented in two dimensions. It can also be a 3D-skeleton sequence, in which the positions of the joints of the skeleton are represented in three dimensions.

A 2D skeleton sequence can be obtained based on a sequence of images showing the person during his, her or its motion, acquired for instance with a camera.

A 3D skeleton sequence can be obtained based on either data acquired with a high resolution 3D-scanner, or by acquired using tracking targets fastened to the joints or the segments of the skeleton of the person, etc.

In each case, once the data has been acquired at each time point over the considered time period (which data can be an image, a 3D-pointcloud, etc.), the 2D- or respectively 3D-location of each joint of the skeleton of the person, if possible, then has to be determined for each time point. Several known methods can be used to obtain such skeleton sequences.

In the exemplary embodiment presented hereafter, the skeleton sequences are modeled by a spatio-temporal matrices noted p_{m,c}, where p_{m,c} ∈ R^{T ×V ×Cin} where R is the set of real numbers, T, V , and Cᵢₙ represent the number of frames of the video, the number of joints of the skeleton, and the input channels (Cᵢₙ = 2 for 2D data), respectively.

For each frame, the 2D body joint coordinates are therefore arranged in a matrix, with consistent order between different frames. The matrices of different frames are then stacked along the temporal dimension to obtain the matrix p_{m,c}.

Note, the same model is also used in document [1] to represent skeleton sequences.

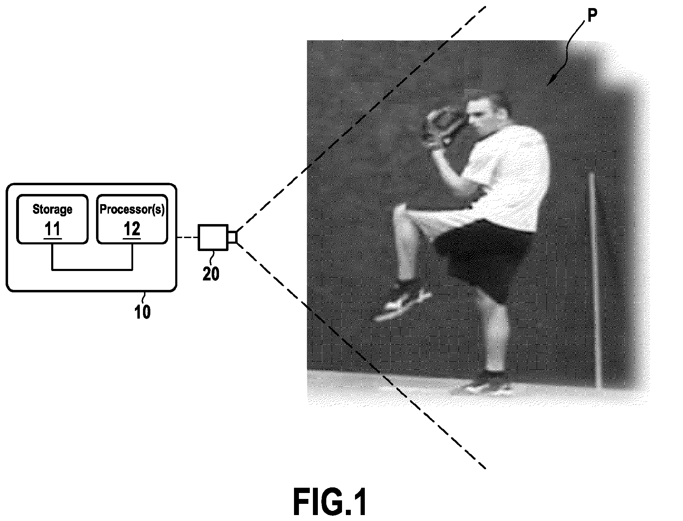

Fig.1 represents a system S according to the present disclosure configured to perform one of the methods disclosed herein. For example, system S can be a system configured to perform a base function of calculating a motion representation rₘ, as well as a more advanced function of performing a motion-based task (which is action classification in the embodiment presented). System S is further configured to perform the training methods according to the present disclosure, in order to learn how to perform these functions.

System S comprises a computer 10 and a camera 20 connected to computer 10.

The core functions of system S are implemented on computer 10. Computer 10 comprises a non-transitory storage medium 11 and one or more processor(s) 12 (Fig.1). The one or more processors 12 are intended to be representative of the presence of any one or more processors or processing devices, of any of a variety of forms. In addition, although computer 10 is represented on Fig.1 in a single housing, it may be a distributed calculation system, comprising a plurality of processors, possibly physically arranged on different locations. For instance, part of processors 12 may be part of a remote server.

Camera 20 can be any type of digital camera, capable of acquiring views of an object. The images acquired by camera 20 are transmitted to computer 10.

Computer programs P comprising instructions which, when they are executed by the processor(s) 12, cause these processor(s) to carry out the steps of any one of the methods disclosed herein, are stored in storage medium 11. That is, programs P include instructions which, when they are executed by the processor(s) 12, cause these processor(s) first to train system S, and then, when system S is trained, to calculate motion representation of the motion of persons identified in video sequences, and to determine the action performed by the person.

The programs P and the storage media 11 are examples respectively of computer programs and a computer-readable recording medium according to the present disclosure.

The memory 11 of computer 10 constitutes a non-volatile recording medium according to the present disclosure, readable by the one or more processor(s) 12 and on which the programs P are recorded.

The functional architecture, the operation and the training of a system according to the present disclosure, which can be used to calculate motion representations, and can further be used to perform motion-based tasks (in the embodiment presented herein: action classification) are now going to be presented.

### ARCHITECTURE

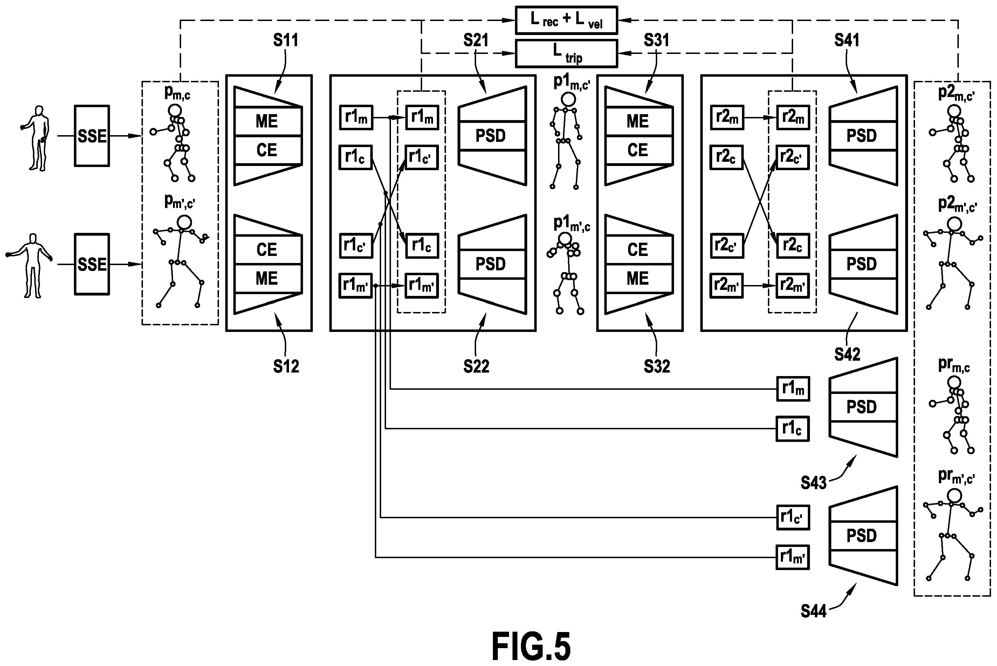

The architecture of the core part of system S, which is trained to calculate a motion representation rₘ representing a motion of a person, based on a skeleton sequence p_{m,c} representing a motion of a skeleton of the person, is shown on Fig.5.

The architecture of the downstream part of system S, the downstream task decoder DTD which is trained to perform a motion-based task, is shown on Fig.5.

System S comprises upstream, in the present embodiment, a skeleton sequence extraction unit SSE. This unit is configured, based on a video sequence received from camera 20, to output a skeleton sequence (sequences p_{m,c} and p_{m',c'}) describing the motion of the skeleton of one or more person(s) shown in the inputted video sequence. (To simplify the description, it is supposed hereafter that only one person is shown in the video. However, the systems and methods according to the present disclosure can be implemented in the case where the skeleton sequence comprises skeleton sequences of more than one person).

Downstream the skeleton sequence extraction unit SSE, a first core unit of system S is a motion encoder ME.

Based on the extracted skeleton sequence, the motion encoder ME is configured to calculate a view- and subject-invariant representation rₘ of a motion performed by a person, based on a skeleton sequence showing the motion of the skeleton of the person during a considered time period.

For instance, system S can acquire a sequence of images acquired by camera 20. These images show the movements of the person P shown on Fig.1.

Based on these images, the skeleton sequence p_{m,c} is calculated by the skeleton sequence extraction unit SSE of system S.

Based on skeleton sequence p_{m,c}, system S will automatically determine the class of action performed by person P during the time period.

In order to disentangle the static from the dynamic information, both present in the skeleton sequence, system S further comprises two additional networks: a Character Encoder CE and a Pose Sequence Decoder PSD. The architecture of the Motion Encoder ME, the Character Encoder CE and the Pose Sequence Decoder PSD will now be presented.

The Motion Encoder ME and the Character Encoder CE constitute two embedding encoders which decompose an inputted skeleton sequence p_{m,c} in parallel respectively into a 'Motion' representation rₘ and a 'Character' representation r_{c}.

The function of the Motion Encoder is therefore, based on a skeleton sequence p_{m,c}, to generate a view-invariant and generalizable representation rₘ of the action performed by the person during the skeleton sequence. The Motion Encoder thus needs to effectively extract the spatio-temporal features of the motion of the skeleton.

Various architectures may be adopted for the Motion Encoder.

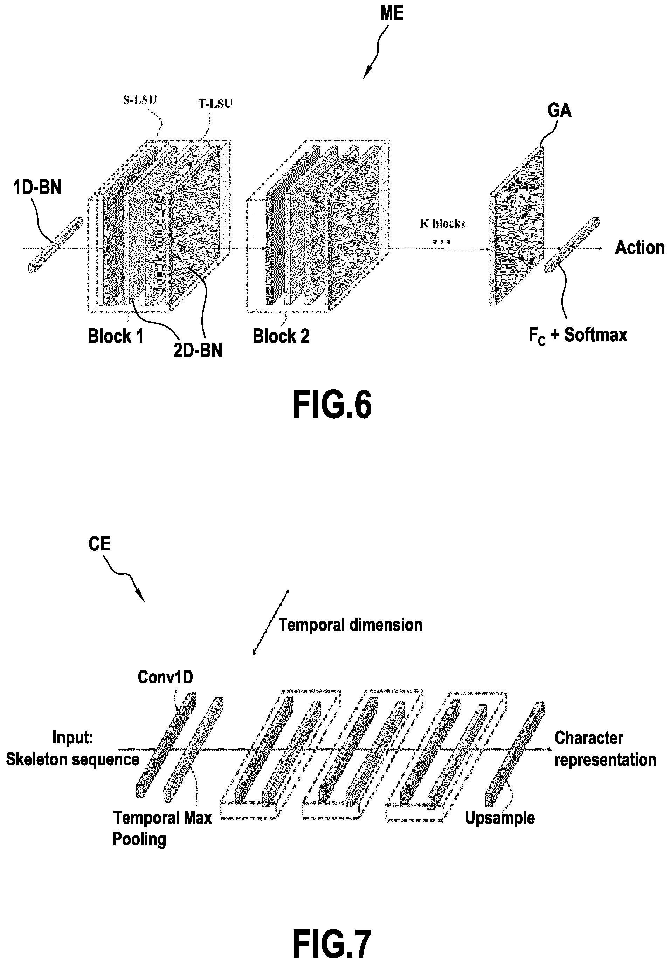

The overall architecture may be composed of a plurality of motion encoder blocks ST-LS_{block}, as shown on Fig.6, configured to perform multi-scale (that is, at multiple scales) extraction respectively of spatial and temporal features of skeleton sequences.

In each block ST-LS_{block}, the key components are a spatial Long-short Dependency learning Unit S-LSU and a temporal Long-short Dependency learning Unit T-LSU. These units extract respectively spatial and temporal multi-scale features on skeletons over a large receptive field. The function performed by an individual building block ST-LS_{block} can be formulated as follows: ${f}_{out} = ST - {LS}_{block} \left({f}_{in}\right) = T - LSU \left(S-LSU\left({f}_{in}\right)\right)$ where fᵢₙ and fₒᵤₜ are the input and respectively the output of the building block, S-LSU and T-SLU represent the respective functions of the S-LSU unit and the T-LSU unit, and ST-LS_{bloc} represents the function performed by the whole considered building block ST-LS_{block}.

In a building block, in this embodiment, each of the S-LSU and T-LSU units is followed by a 2D Batch Normalization layer 2D-BN; a 1D Batch normalization layer 1D-BN is further provided in the upstream part of the buidling block for normalizing the flattened input data (BN stands for 'Batch Normalization').

In addition, a final Global Average pooling block GA may be provided downstream the motion encoder blocks ST-LS_{block}.

A fully connected layer further configured to realize a softmax function may further be provided downstream the Global Average pooling block GA.

While the motion encoder ME may have the architecture presented above, the motion encoder more generally may have any architecture enabling it to extract the core features (preferably as a compact low-dimensional vector) of a skeleton sequence.

Many recently published documents disclose motion encoders exhibiting such capabilities and which can be used to implement the present disclosure, as for instance Refs. [1], [6] or [9], etc.

In the embodiment presented herein, the motion encoder ME comprises 10 convolutional building blocks ST-LS_{block}. Each block contains a spatial and a temporal convolutional network that extracts both, spatial and temporal multi-scale features from the skeleton sequence. For the spatial processing, 1×1 convolutions are used to expand the data channels and then multiply the features by using uniformly initialized and learnable dependency matrices. For the temporal processing, 9 × 1 convolutions with strides are utilized. The size of the temporal dimension of embedded latent 'Motion representation' depends on the duration of the input sequence.

More detailed information about the architecture of the motion encoder ME, and in particular about the spatial Long-short Dependency learning Unit S-LSU and the temporal Long-short Dependency learning Unit T-LSU can be found in Ref. [1], since the motion encoder ME of the embodiment presented herein has the same architecture as the one proposed by Ref. [1].

The function of the Character Encoder, similar to the function of the Motion Encoder ME, is, based on a skeleton sequence p_{m,c}, to generate a generalizable representation r_{c} of the character of the person, irrespective of its motion during the skeleton sequence. The Character Encoder thus needs to effectively extract the character-related features of the person, merely based on the skeleton sequence.

The function of the pose sequence decoder PSD is somehow inverse to the function of the Motion Encoder ME. Indeed the function of the pose sequence decoder is, based on to generate a character representation r_{c} of the character of the person and a motion representation rₘ representing a motion of the person, to generate a corresponding skeleton sequence p_{m,c} which combines the character-related features of the person, represented by the character representation r_{c}, with the motion-related features represented by the motion representation rₘ.

The character encoder CE and the pose sequence decoder PSD may be neural networks comprising multiple 1D temporal convolutional layers with temporal global max pooling and upsampling, to respectively encode and decode the skeleton sequences. The character encoder CE and the pose sequence decoder PSD may for instance have the architecture proposed in [1].

More specifically, as shown in Fig.7, the character encoder CE may comprise four (or more) 1D temporal convolutional layers. Each of these layers may be followed by a temporal global max pooling layer to encode the skeleton sequence to the character representation. The four 1D temporal convolutional layers are connected downstream with an upsampling block, configured to output a representation have the same size along the temporal dimension as the motion representation rₘ.

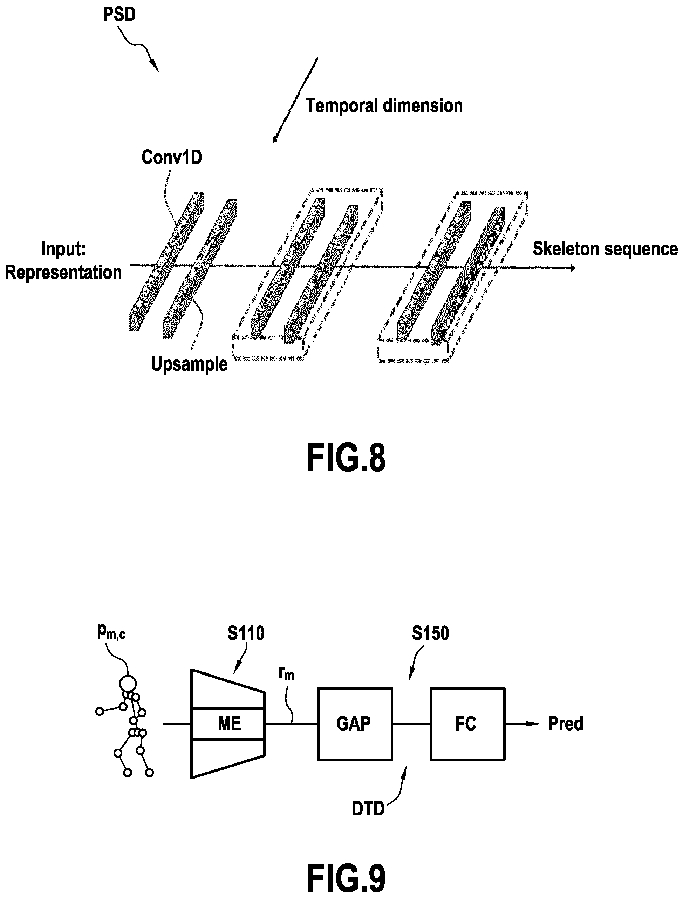

In addition, as shown in Fig.8, the pose sequence decoder PSD may comprise three (or more) 1D temporal convolutional layers. These layers may be connected downstream with an upsampling block, configured to reconstruct the skeleton pose sequence.

In addition, in order to perform its additional function of downstream task calculation, system S further comprises a downstream task decoder DTD.

In the data flow, the downstream task decoder DTD is placed in series downstream the motion encoder ME. Accordingly, the motion encoder ME , based on a 2D skeleton sequence, calculates a view- and subject-invariant representation of a motion performed by a person, based on a skeleton sequence showing the motion of the skeleton of the person during a considered time period. On this basis, the downstream task decoder predict the action performed by the person.

The DTD may have any architecture suitable to perform the considered downstream motion-based task. The architecture, needless to say, has to be adapted to accept as an input the motion- representation rₘ. An example of a possible architecture for the DTD is shown on Fig.9 and described below.

As mentioned above, the input of the downstream task decoder DTD is the output of the motion encoder ME.

In the present embodiment, the DTD simply comprises a Global Average pooling block GAP and a fully-connected layer FC.

The output of the motion encoder ME passes through the Global Average pooling block GAP, and finally through the fully-connected layer FC, to finally output the predicted action.

### OPERATION

In operation, system S is exploited either for its base function of calculating a motion representation rₘ (using only the modules shown on Fig.5), and/or for its more advanced function of performing the motion-based task of actions classification (also using the Downstream Task Decoder DTD of Fig.9).

As an initial step, a sequence of images acquired by a camera is inputted to the skeleton sequence extraction module SSE, which on this basis calculates the skeleton sequence p_{m,c} describing the motion of the person in that video (Step S200).

The skeleton sequence p_{m,c} is inputted to the motion encoder ME. On this basis, the motion encoder processes the skeleton sequence p_{m,c} and outputs a motion representation rₘ (step S210).

Then, based on the motion representation rₘ, downstream layers of the downstream task decoder DTD output the predicted action (step S220).

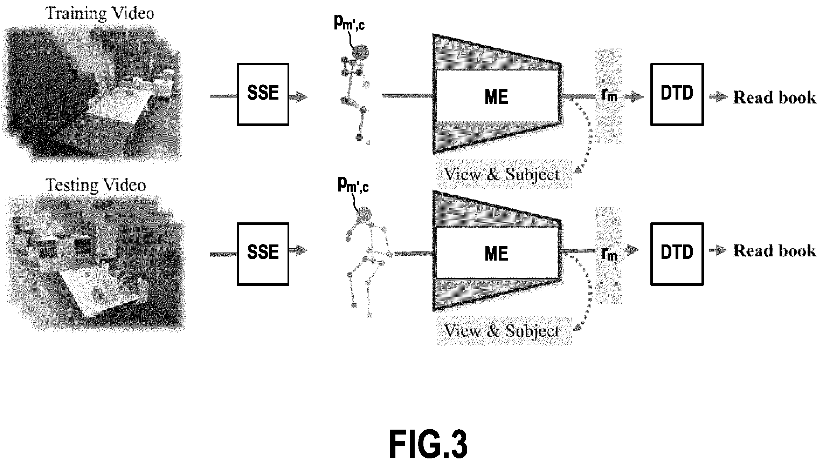

For instance, as shown in the lower half of Fig.3, system S may be configured to input a testing video. The motion encoder ME inputs the extracted skeleton sequence p_{m,c} and on this basis, calculates the motion representation rₘ. Finally, on the basis of the motion representation rₘ, the downstream task decoder DTD determines the action shown in the video and in the present case, determines that this action consists in reading a book.

### TRAINING

The motion encoder ME, the character encoder CE and the pose sequence decoder PSD are trained either only during a main training phase, or in said main training phase followed by a fine-tuning phase.

Beforehand, based on various videos, a number of skeleton sequences p_{m,c} are generated with the skeleton sequence extraction unit SSE, and gathered in order to constitute a training dataset. Advantageously, no supervision data is necessary in the training dataset.

### A) Main training

During the main training phase, the motion and character encoders ME, CE and the Pose Sequence Decoder PSD are trained jointly to enable the motion and character encoders ME, CE to predict representations of the Motion features and the Character features. At the same time, the Pose Sequence Decoder PSD learns, based on the outputted motion representations and character representations, to correctly predict skeleton sequences.

The training is performed iteratively.

At each iteration, a pair of skeleton sequences, that is, a first initial skeleton sequence p_{m,c} and a second initial skeleton sequence p_{m',c'} are selected and are inputted to the motion and character encoders ME, CE.

It is preferable that the first input sequence p_{m,c} and the second input sequence p_{m',c'} be different from each other.

In this purpose, before training the skeleton sequences of the training dataset are clustered, for instance using the K-Means algorithm or the like.

Then, at each training iteration, at step S10 a pair of skeleton sequences (p_{m,c}, p_{m',c'}) is selected from the training dataset.

In the pair of skeleton sequences, the first skeleton sequence (p_{m,c}) is randomly sampled from the training dataset; the second skeleton sequence (p_{m',c'}) is also randomly sampled for the training dataset, excluding however the cluster where the first skeleton sequence p_{m,c} belongs.

Since the second skeleton sequence is sampled from an other cluster than the cluster to which the first skeleton sequence belongs, in principle the distance between the first skeleton sequence p_{m,c} and the second skeleton sequence p_{m',c'} is above a threshold or at least, is likely above a threshold (The distance function mentioned here being preferably the distance which is minimized or maximized in the loss function to train the motion- and character-encoders).

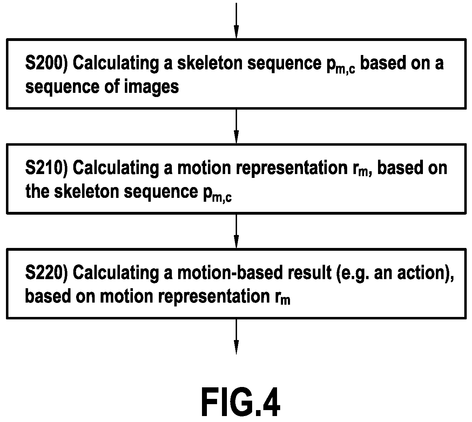

During training, at each training iteration, two successive combined embedding and retargeting operations are performed successively (Figs.4, 7).

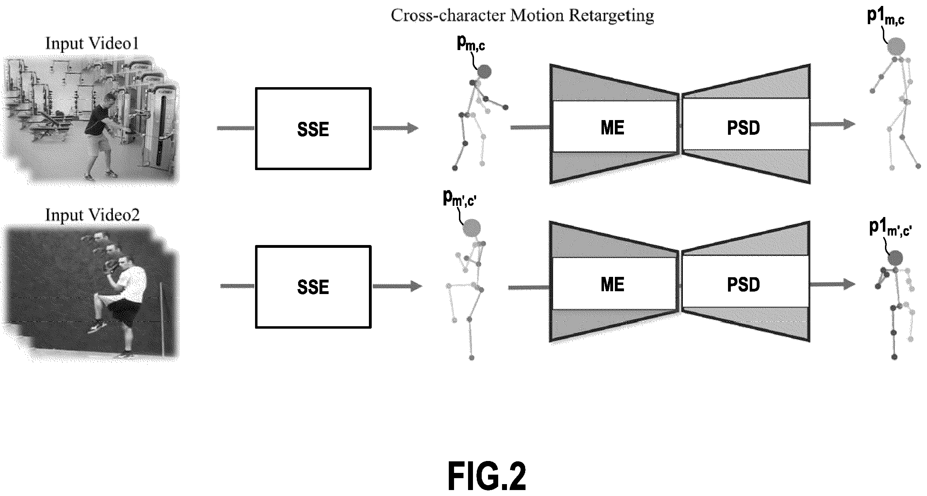

In the first combined embedding and retargeting operation (Fig.2), the two initial skeleton sequences (p_{m,c} and p_{m',c'}) selected as indicated above are inputted to the motion- and character- Encoders ME and CE.

For each initially inputted skeleton sequence (among p_{m,c} and P_{m',c'}), a primary retargeted skeleton sequence (primary retargeted skeleton sequences p1_{m,c'};p1_{m',c}) is generated which in principle keeps the motion of the initially inputted skeleton sequence, but inherits the character features of the other initially inputted skeleton sequence, as it will be explained below.

Then, in the subsequent second retargeting operation, the inverse operation is performed: for each primary retargeted skeleton sequence (among p1_{m,c'};p1_{m',c}) obtained during the first retargeting operation, a secondary retargeted skeleton sequence is generated (secondary retargeted skeleton sequences p2ₘ,ₑ;p2_{m'},_{e'}), which in principle keeps the motion features of the primary retargeted skeleton sequence (identical to that of the initially inputted skeleton sequence), but now inherits again the character features of the initially inputted skeleton sequence, contrary to the primary retargeted skeleton sequence.

Accordingly, the following operations are performed.

At step S10, the first initial skeleton sequence p_{m,c} and the second initial skeleton sequence p_{m',c'} are selected.

At a step S11 of the first embedding steps S11-S12, the first skeleton sequences p_{m,c} is inputted into the motion encoder ME and the character encoder CE.

At a step S12, the second skeleton sequences p_{m',c'} is inputted into the motion encoder ME and the character encoder CE. The motion and character encoders ME, CE decompose each of the sequences p_{m,c} and p_{m',c'} into two disentangled primary representations (r1ₘ,r1_{c};r1_{m'},r1_{c'}) and accordingly output the disentangled primary representations r1ₘ, r_{1m'}, r1_{c}, r1_{c'} of the two skeleton sequences, as in equation (1): $r {1}_{m} = ME \left({p}_{m , c}\right) , r {1}_{c} = CE \left({p}_{m , c}\right) , r {1}_{m ′} = ME \left({p}_{m ′ , c ′}\right) , r {1}_{c ′} = CE \left({p}_{m ′ , c ′}\right)$

Then at the first retargetting steps S21 and S22, the primary character representations r1_{c} and r1_{c'} are swapped, and recombined with the primary motion representations r1_{m'}, and r1ₘ by concatenation.

Therefore, respectively at steps S21 and S22, based respectively on the recombined representations r1ₘ and r1_{c'} and on the recombined representations r1_{m'} and r1_{c'} the Pose Sequence Decoder PSD then generates the primary retargeted skeleton sequences p1_{m,c'}, and p1_{m',c}.

The generation of the primary retargeted skeleton sequences can therefore be formulated as $p {1}_{m , c ′} = PSD \left(r{1}_{m}, r{1}_{c ′}\right) and p {1}_{m ′ , c} = PSD \left(r{1}_{m ′}, r{1}_{c}\right)$

Then, the second combined embedding and retargeting operations are performed.

At second embedding steps S31 and S32, the primary retargeted skeleton sequences p1_{m,c'};p1_{m',c} are inputted into the motion- and character-encoders ME and CE, which output respectively secondary disentangled representations r2ₘ, r2_{m'}, r2_{c}, r2_{c'} of the two primary retargeted skeleton sequences.

Then, at the second retargetting steps S41 and S42, the character representations (now: r2_{c} and r2_{c'}) are swapped and recombined with the motion representations (now r2ₘ, and r2ₘ) by concatenation. Based respectively on the recombined representations r2ₘ and r2_{c'}, and on the recombined representations r2ₘ, and r2c, the Pose Sequence Decoder PSD then generates the secondary retargeted skeleton sequences p2_{m,c};p2_{m',c'}.

The generation of the secondary retargeted skeleton sequences can therefore be formulated as $p {2}_{m , c} = PSD \left(r{2}_{m}, r{2}_{c}\right) and p {2}_{m ′ , c ′} = PSD \left(r{2}_{m ′}, r{2}_{c ′}\right)$

In addition, the following steps are performed:
S43) based on the first primary motion representation r1ₘ and the first primary character representation r1_{c}, a first reconstructed skeleton sequence pr_{m,c} is calculated;
S44) based on the second primary motion representation r1_{m'} and the second primary character representation r1_{c'}, a second reconstructed skeleton sequence pr_{m',c'} is calculated.

Then, an update step S60 is carried out, during which the weights of the motion encoder ME, the character encoder CE and the Pose Sequence Decoder PSD are updated.

In this purpose, it is intended that the reconstructed skeleton sequences pr_{m,c} and pr_{m',c'} be identical to the initial skeleton sequences p_{m,c} and p_{m',c}.

Therefore, during the update step S60, the parameters of the motion encoder ME, and of the character encoder CE and/or of the pose sequence decoder PSD are updated so as to minimize differences, for at least one of the initial skeleton sequences, between the initial skeleton sequence P_{m,c}; p_{m',c'} and the corresponding reconstructed skeleton sequence pr_{m,c}; pr_{m',c'}.

In addition, in order to teach the motion encoder ME and the character encoder CE to properly disentangle the motion features from the character features, as will be explained below, the motion encoder ME and the character encoder CE are trained so that the outputted secondary retargeted skeleton sequences p2m,c;p2m',c' be as identical as possible to the initially inputted skeleton sequences p_{m,c};p_{m',c'}.

That is, the pair (p_{m,c};p_{m',c'}) of initial 2D skeleton sequences are used as ground truth to jointly train the motion and character encoders ME, CE and the Pose Sequence Decoder PSD.

These training steps are repeated as long as necessary to achieve convergence. The level of convergence is assessed at each iteration during a test step S70.

The Motion Encoder ME, the Character Encoder CE and the Pose Sequence Decoder PSD are therefore jointly trained by self-supervision, using a loss function L which will now be described.

### Loss function

In the embodiment presented herein, the loss function L is defined as the summation of three components: The reconstruction loss L_{rec}, the contrastive triplet loss Lₜᵣᵢₚ, and the temporal velocity loss Lᵥₑₗ: $L = L rec + L trip + L vel$

### Reconstruction Loss term

The reconstruction loss aims at guiding the motion encoder ME, the character encoder CE and the pose sequenced decoder PSD towards a high generation quality at the global sequence level. It consists of two components: ${L}_{rec} = {L}_{self} + {L}_{cycle}$

Specifically, at every training iteration, the pose sequence decoder PSD is firstly required to reconstruct each of the initial skeleton sequences p_{m,c} using its embeddings (its motion- and character- representations) r1ₘ and r1_{c} (steps S43 and S44). The 'self' component of the loss denoted as L_{self} accordingly is formulated as the expectation of the squared error between the initial skeleton sequence and the reconstructed skeleton sequence, i.e. it is formulated as a standard autoencoder reconstruction loss, in order to encourage the networks to reconstruct the initial skeleton sequences with high fidelity (see Equation below). ${L}_{self} = E \left[{\left|{pr}_{m , c}-{p}_{m , c}\right|}^{2}\right]$ where E is the expectation function.

Moreover, at each iteration, the pose sequence decoder PSD is further encouraged to correctly re-compose the initial skeleton sequences p_{m,c} and p_{m',c'} despite the two successive combined embedding-retargeting operations that have been performed, as explained above. To this end, the loss function L includes a cycle reconstruction loss L_{cycle} (see Equation below). This loss term L_{cycle} is formulated as the expectation of the squared error between between the initial skeleton sequence and the secondary skeleton sequence : ${L}_{cycle} = E \left[{\left|p{2}_{m , c}-{p}_{m , c}\right|}^{2}\right]$

At each iteration, the reconstruction loss term L_{rec} is preferably calculated for both the first initial skeleton sequence and the second initial skeleton sequence.

### Contrastive Triplet Loss

In the representation level, the triplet loss Lₜᵣᵢₚ is calculated for the skeleton sequences (both the first initial skeleton sequence and its negative sample, the second initial skeleton sequence) as $L trip = {L}_{trip M} + {L}_{trip C}$

The first term L_{trip_m} of this loss term Lₜᵣᵢₚ is related to motion.

This first term L_{trip_m} aims first to enhance the similarity between the primary motion representation r1ₘ and the secondary motion representation r2ₘ, which representations are supposed to represent the same motion, although performed by different characters. The purpose of this first term L_{trip_m} ultimately is to force the motion representation to be view-invariant. Specifically, the similarity between r1ₘ and r2ₘ is encouraged (that is, differences between r1ₘ and r2ₘ is minimized).

Conversely, and optionally, the similarity between r1ₘ and the other motion r2ₘ, performed by the other skeleton sequence, is discouraged (that is, differences between r1ₘ and r2ₘ, are maximized).

For the same reasons, the second contrastive triplet loss term L_{trip c} for the character is defined in the same way.

In the embodiment presented herein, these loss terms are defined as follows: ${L}_{trip _ m} = E \left[{\left|r{2}_{m}-{r}_{m}\right|}^{2}-{\left|r{2}_{m}-{r}_{m ′}\right|}^{2}+α\right] +$ ${L}_{trip _ c} = E \left[{\left|r{2}_{c}-{r}_{c}\right|}^{2}-{\left|r{2}_{c}-{r}_{c ′}\right|}^{2}+α\right] +$ where
the '+' sign on the right of the equations means that the loss L_{trip_m} or L_{trip_c} should always be a positive value: If the equation yields a negative value obtained by the equation, the loss L_{trip_m} or L_{trip_c} is then equal to 0 (Alternatively, L_{trip_m} or L_{trip_c} could also be defined as: ${L}_{trip _ m} or {L}_{trip _ c} = max \left.\left(E\left[…\right], 0\right)\right) ;$ and
α is a constant which represents the triplet margin, which means that the distance between r2ₘ and r_{m'} should be larger than α. In the embodiment presented herein, α is set to 1.0.

### Velocity Loss

Finally, it has been noticed that the reconstruction loss term, which constrains the networks to regenerate the original skeleton sequences during the combined embedding and retargeting operations with the minimum global errors for all the joints of the skeleton, however may miss important temporal consistencies of each individual joint. Therefore, substantial errors can be generated at some joints (for instance at the hands- and feet- joints). In order to mitigate this problem, a temporal consistency restriction is explicitly adopted for some of the joints (preferably the most important body joints), called herein the 'V body joints'.

In the embodiment presented herein, these V joints constitute a set of 17 body keypoints, noted as an ensemble J.

The velocities of each of these keypoints (from keypoint 1 to keypoint 17) are determined.

Based on these velocities, a velocity loss term Lᵥₑₗ is then calculated for the loss function L.This term aims at minimizing the differences of velocity, for each of the V joints, between the initial skeleton sequence (p_{m,c} or p_{m',c'}) and the corresponding secondary skeleton sequence (p2_{m,c} or p2_{m',c'}).

This term Lᵥₑₗ constrains the velocity-i.e., the displacement of joints over time, within the skeleton sequence. In the present embodiment, the term Lᵥₑₗ is calculated as follows: ${L}_{vel} = λ E \left[{\sum }_{n ∈ J} {\left|{ν}_{n}\left(p{2}_{m , c}\right)-{v}_{n}\left({p}_{m , c}\right)\right|}^{2}\right]$ where νₙ denotes the velocity of the n-th joint for a considered skeleton sequence, which can be calculated by the distance between this skeleton joint at frame τ^{-th} and at frame τ+1^{-th}. λ indicates a weighting factor of the velocity loss.

### B) Fine-tuning

In a second (and optional) training phase, the motion encoder ME (separately from the other networks shown on Fig.5) may be further trained, or rather fine-tuned, as follows.

During this phase, the motion encoder ME is combined (or connected) downstream with the downstream task decoder DTD, so as to perform a motion-based task as a downstream task.

The motion-based task can be any prediction task which can be performed based on a skeleton sequence representing a motion of a person, **and whose** result depends essentially on the motion of the person. Of course, the motion-based task is preferably selected as a task for which either training datasets are available, or at least are easy to constitute.

The motion encoder ME and the downstream task decoder are then trained jointly to perform the motion-based task.

It is also possible to keep the motion encoder ME frozen during this phase, and to only train the downstream task decoder DTD.

In the present embodiment, the pretext task consists in classifying the action performed by the person among a plurality of action classes, based on the skeleton sequence.

In the present embodiment, the downstream task decoder DTD is a neural-network-based action classifier which comprises sequentially from upstream to downstream, as shown on Fig.9, a first layer GAP which performs global average pooling, and a fully-connected layer FC which predicts the class of the action performed by the person.

In order to perform the second training phase, a training database is constituted. This database comprises skeleton sequences and for each skeleton sequence, as ground truth, the indication of the action actually performed by the person whose skeleton is shown in the skeleton sequence.

The training is performed iteratively.

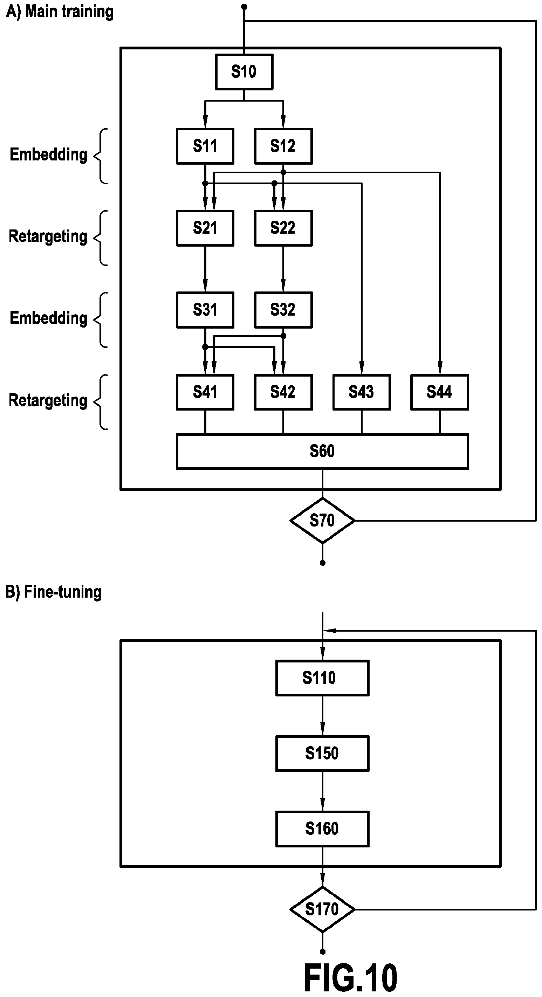

At each iteration (Figs.9,10), based on a skeleton sequence p_{m,c} retrieved from the training dataset, the motion Encoder ME outputs a motion representation rₘ, (Step S110).

Then, the motion representation rₘ is transmitted to the GAP layer (Step S150).

The output of the GAP layer is then transmitted to the fully-connected layer FC. On this basis, the fully-connected layer FC predicts the class of the action represented by the skeleton sequence (Step S160).

These training steps are repeated as long as necessary to achieve convergence. The level of convergence is assessed at each step in a test step S170.

Accordingly, the motion encoder ME and the downstream task decoder DTD are trained jointly by end-to-end training, using a loss function which penalizes differences between the action predicted by the decoder DTD and the actual action comprised in the training dataset for the considered skeleton sequence.

### Results

The methods and systems proposed herein have been tested over various training datasets. They have been tested in particular on four real-world action classification datasets: Posetics (see document [1], Toyota Smarthome (document [4]), UAV-Human (see document [5]) and Penn Action (see document [17]).

Based on the dataset Posetics, the following results have been obtained:

| Method | Supervision | Top 1 (%) | Top 5 (%) |
|---|---|---|---|
| TCNs [7] | Supervised | 34.0 | 57.2 |
| ST-GCN [8] | Supervised | 43.3 | 67.3 |
| 2s-AGCN [9] | Supervised | 47.0 | 70.8 |
| Res-GCN [10] | Supervised | 46.7 | 70.6 |
| MS-G3D Net [11] | Supervised | 47.1 | 70.0 |
| UNIK [1] | Supervised | 47.6 | 71.3 |
| ViA (Ours ft.) | Supervised | 47.8 | 72.0 |
| Linear (Baseline) | Unsupervised | 8.2 | 21.4 |
| Pr-ViPE [12] | Unsupervised | 17.2 | 35.3 |
| OR-VPE [13] | Unsupervised | 14.6 | 31.2 |
| 3s-CrosSCLR [14] | Unsupervised | 18.8 | 38.1 |
| ViA (Ours) | Unsupervised | 20.1 | 39.5 |

The tested method is indicated in the left-most column with, between square brackets, the reference of the document which describes the method. The 'Supervision' column indicates whether in the method, the training is supervised or not.

The two columns on the right indicate the task recognition performance, as a percentage, respectively for the best-performing , or respectively for the five best-performing.

The column 'Top-1' indicates the performance with respect to the conventional accuracy : the model prediction (the action predicted with the highest probability) must be exactly the expected answer.

The column 'Top-5' indicates the probability that any of the model's top 5 highest probability answers match with the expected answer. That is, a classification is considered to be correct if any of the five best predictions matches the target label.

This table shows that the proposed method exhibits higher performance than state-of-the art method.

In addition, since the action classification method according to the present disclosure involves the calculation of motion representation (and character representation), the above-results further show the efficiency of the motion-representation- and character representation- calculation methods of the present disclosure.

In addition, the table below shows additional results obtained after training, including the fine-tuning step, for the downstream task of action classification. These results have been obtained using the Toyota Smarthome, UAV-Human and Penn Action datasets.

| | Toyota Smarthome | | | UAV human | | Penn Action |
|---|---|---|---|---|---|---|
| | CS (%) | CV1 (%) | CV2 (%) | CV1 (%) | CV2 (%) | Top 1 (%) |
| Previous SotA | 63.1 [1] | 22.9 [1] | 61.2 [1] | 38.0 [15] | 67.0 [15] | 97.5 [16] |
| Via | 64.0 | 35.6 | 65.4 | 41.3 | 68.5 | 97.7 |

The tested method is indicated in the left-most column, in which 'Previous SotA' refers to existing state-of-the-art method, and 'Via' refers to the methods according to the present disclosure.

CS refers to cross-subject evaluation: The 18 subjects are split into training and testing groups. The training group consists of 11 subjects, and the remaining 7 subjects are reserved for testing.

CV refers to 'cross-view' evaluation: the dataset has two CV protocols, CV1 and CV2. Both protocols use one camera (camera ID 2) for testing and one camera (camera ID 5) for validation. For CV1, we pick all samples of one camera (camera ID 1) for training. Camera 1 and camera 2 are both recorded in the dining room, having activities being performed in the same scene from two different viewpoints. This protocol also allows us to verify the generalization of the recognition system as it provides a smaller, highly imbalanced training set. For CV2, the samples are acquired from 5 cameras (camera ID 1, 3, 4, 6, 7) for the training set.

On the right of each result for the state-of-the-art results, the reference of the document which describes the state-of-the art method referred to is indicated between square brackets.

State-of-the-art results are from supervised models training using skeleton data from scratch without any representation learning (pre-training).

Based on the above test and on the various tests performed on the datasets mentioned before, the methods and systems proposed herein have shown improved performances, in comparison with state-of-the-art methods, to efficiently classify tasks.

For the reason explained above, these results further show the efficiency of the motion-representation- and character representation-calculation methods of the present disclosure to calculate motion and character representations. The efficiency of these representations is evidenced indeed by the performance of the systems which use these representations as a basis to perform motion-based downstream tasks.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A computer-implemented training method for training a motion encoder (ME) to calculate a motion representation (rₘ) representing a motion of a person, based on a skeleton sequence (p_{m,c}) representing a motion of a skeleton of the person and/or for training a character encoder (CE) to calculate a character representation (r_{c}) representing personal features of the person, based on the skeleton sequence (p_{m,c}), wherein,
the motion encoder (ME) comprises a plurality of motion encoder blocks, configured to extract respectively spatial and temporal multi-scale features of skeleton sequences;
the character encoder (CE) is a convolutional neural network comprising a plurality of 1D temporal convolutional layers;
a pose sequence decoder (PSD) is a convolutional neural network comprising at least three 1D temporal convolutional layers connected downstream with an upsampling block;
the training method comprises performing iteratively the following steps:
S11) based on a first initial skeleton sequence (p_{m,c},), calculating a first primary motion representation (r1ₘ) with the motion encoder (ME) and calculating a first primary character representation (r1_{c}) with the character encoder (CE);
S12) based on a second initial skeleton sequence (p_{m',c'}) different from the first initial skeleton sequence, calculating a second primary motion representation (r1_{m'}) with the motion encoder (ME) and calculating a second primary character representation (r1_{c'}) with the character encoder (CE);
S21) based on the first primary motion representation (r1ₘ) and the second primary character representation (r1_{c'}), calculating a first primary skeleton sequence (p1_{m,c'}) with the pose sequence decoder (PSD);
S22) based on the second primary motion representation (r1_{m'}) and the first primary character representation (r1_{c}), calculating a second primary skeleton sequence (p1_{m',c}) with the pose sequence decoder (PSD);
S31) based on the first primary skeleton sequence (p1_{m,c'}), calculating a first secondary motion representation (r2ₘ) with the motion encoder (ME) and calculating a first secondary character representation (r2_{c'}) with the character encoder (CE);
S32) based on the second primary skeleton sequence (p1_{m',c}), calculating a second secondary motion representation (r2_{m'}) with the motion encoder (ME) and calculating a second secondary character representation (r2_{c}) with the character encoder (CE);
S41) based on the first secondary motion representation (r2ₘ) and the second secondary character representation (r2_{c}), calculating a first secondary skeleton sequence (p2_{m,c}) with the pose sequence decoder (PSD);
S42) based on the second secondary motion representation (r2_{m'}) and the first secondary character representation (r2_{c'}), calculating a second secondary skeleton sequence (p2_{m',c'}) with the pose sequence decoder (PSD);
S60) updating parameters of at least the motion encoder (ME) and/or the character encoder (CE) so as to minimize differences between the first initial skeleton sequence (p_{m,c},) and the first secondary skeleton sequence (p2_{m,c}).

2. The computer-implemented training method according to claim 1, wherein each motion encoder block comprises at least a Spatial Long-short Dependency learning Unit (S-LSU) and a Temporal Long-short Dependency learning Unit (T-LSU).

3. The computer-implemented training method according to claim 1 or 2 further comprising a step S10:
S10) identifying a first initial skeleton sequence (p_{m,c},), and a second initial skeleton sequence (p_{m',c'}) so that a distance between first initial skeleton sequence (p_{m,c},) and the second initial skeleton sequence (p_{m',c'}) be above a threshold or be likely above a threshold.

4. The computer-implemented training method according to any one of claims 1 to 3, further comprising steps of:
S43) based on the first primary motion representation (r1ₘ) and the first primary character representation (r1_{c}), calculating a first reconstructed skeleton sequence (pr_{m,c});
S44) based on the second primary motion representation (r1_{m'}) and the second primary character representation (r1_{c'}), calculating a second reconstructed skeleton sequence (pr_{m',c'}); and
wherein during the update step S60, the parameters of the motion encoder (ME), of the character encoder (CE) and/or of the pose sequence decoder (PSD) are updated so as to minimize differences, for at least one of the initial skeleton sequences, between the initial skeleton sequence (p_{m,c}; p_{m',c'}) and the corresponding reconstructed skeleton sequence (pr_{m,c}; pr_{m',c'}).

5. The computer-implemented training method according to any one of claims 1 to 4, wherein during the update stepS60, the parameters of the motion encoder (ME), of the character encoder (CE) and/or of the pose sequence decoder (PSD), are updated so as to minimize differences:
- between the first primary motion representation (r1ₘ) and the first secondary motion representation (r2ₘ);
- between the second primary motion representation (r1_{m'}) and the second secondary motion representation (r2_{m'});
- between the first primary character representation (r1_{c}) and the first secondary character representation (r2_{c}); and/or
- between the second primary character representation (r1_{c'}) and the second secondary character representation (r2_{c'}).

6. The computer-implemented training method according to any one of claims 1 to 5, wherein during the update stepS60, the parameters of the motion encoder (ME), of the character encoder (CE) and/or of the pose sequence decoder (PSD), are updated so as to maximize differences:
- between the first primary motion representation (r1ₘ) and the second secondary motion representation (r2_{m'});
- between the second primary motion representation (r1_{m'}) and the first secondary motion representation (r2ₘ);
- between the first primary character representation (r1_{c}) and the second secondary character representation (r2_{c'}); and/or
- between the second primary character representation (r1_{c'}) and the first secondary character representation (r2_{c}).

7. The computer-implemented training method according to any one of claims 1 to 6, wherein
each one of the initial skeleton sequences comprises joints; and
during the update step S60, the parameters of the motion encoder (ME), of the character encoder (CE), and/or of the pose sequence decoder (PSD) are updated so as to minimize at least a summation of differences between a speed of a joint of an initial skeleton sequence (p_{m,c}) and a speed of the corresponding joint of a corresponding calculated secondary skeleton sequence (p2_{m,c}).

8. The computer-implemented training method according to any one of claims 1 to 7, wherein the motion encoder (ME) is configured to calculate a 2D- or 3D-representation (rₘ) of motion-related features of a skeleton sequence, based on a 2D-skeleton sequence (p_{m,c}) or a 3D-skeleton sequence (p_{m,c}).

9. A computer-implemented training method for training a motion encoder (ME) to calculate a motion representation (rₘ) representing a motion of a person in a skeleton sequence (p_{m,c}) based on the skeleton sequence (p_{m,c}), and optionally to train a downstream task decoder (DTD) to perform a motion-based task based on said motion representation (rₘ), wherein,
the motion encoder comprises a plurality of motion encoder blocks, configured to extract respectively spatial and temporal multi-scale features of skeleton sequences;
a character encoder (CE) is a convolutional neural network comprising at least four 1D temporal convolutional layers, each 1D temporal convolutional layer being followed by a temporal global max pooling layer; the 1D temporal convolutional layers being connected downstream with an upsampling block configured to output a representation having the same size along a temporal dimension as the motion representation;
a pose sequence decoder (PSD) is a convolutional neural network comprising at least three 1D temporal convolutional layers connected downstream with an upsampling block;
a downstream task decoder (DTD) being a neural network configured to perform the motion-based task;
the training method comprises
A) training the motion encoder (ME) by implementing a training method according to any one of claims 1 to 8;
B) fine-tuning the motion encoder (ME) by:
S110) based on a skeleton sequence (p_{m,c}), calculating a motion representation (rₘ) with the Motion Encoder (ME);
S150) based on the motion representation (rₘ), outputting a prediction with the downstream task decoder (DTD);
S160) updating parameters of at least the motion encoder (ME) so as to minimize differences between the prediction and a ground truth datum corresponding to the skeleton sequence (p_{m,c}).

10. The computer-implemented training method according to claim 9, wherein the motion-based downstream task is action classification.

11. The computer-implemented method for calculating a motion representation (rₘ) representing a motion of a person, based on a skeleton sequence (p_{m,c}) representing a motion of a skeleton of the person, the method comprising:
S210) based on the skeleton sequence (p_{m,c},), calculating a motion representation (rₘ) with a Motion Encoder (ME) trained with a training method according to any one of claims 1 to 10.

12. The computer-implemented method for carrying out a motion-based task based on a skeleton sequence (p_{m,c}) representing a motion of a skeleton of the person over a time period, the method comprising:
S210) based on the skeleton sequence (p_{m,c},), calculating a motion representation (rₘ) with a Motion Encoder (ME);
S220) based on the motion representation (rₘ), outputting a prediction with a downstream task decoder (DTD);
the motion encoder (ME) and the downstream task decoder (DTD) being trained to perform the motion-based task using a method according to claim 9 or 10.

13. One or more computer program(s) (P) comprising instructions which, when the instructions are executed by one or more processor(s) (12), cause the computer to carry out the steps of the method according to any one of claims 1 to 12.

14. A non-transitory computer readable medium (11), having the one or more computer program(s) according to claim 11 stored thereon.

15. A system comprising one or more processor(s) (12) and a non-transitory computer readable medium (11) according to claim 14.

## Patentansprüche

1. Computerumgesetztes Trainingsverfahren zum Trainieren eines Bewegungscodierers (ME), um eine Bewegungsdarstellung (rₘ), die eine Bewegung einer Person darstellt, basierend auf einer Skelettsequenz (p_{m,c}), die eine Bewegung eines Skeletts der Person darstellt, zu berechnen, und/oder zum Trainieren eines Figurcodierers (CE), um eine Figurdarstellung (r_{c}), die persönliche Merkmale der Person darstellt, basierend auf der Skelettsequenz (p_{m,c}) zu berechnen, wobei
der Bewegungscodierer (ME) eine Vielzahl von Bewegungscodiererblöcken umfasst, die dazu konfiguriert sind, räumliche bzw. zeitliche mehrskalige Merkmale von Skelettsequenzen zu extrahieren;
der Figurcodierer (CE) ein neuronales Faltungsnetzwerk ist, das eine Vielzahl von zeitlichen 1D-Faltungsschichten umfasst;
ein Haltungssequenzdecodierer (PSD) ein neuronales Faltungsnetzwerk ist, das mindestens drei zeitliche 1D-Faltungsschichten umfasst, die stromabwärts mit einem Upsampling-Block verbunden sind;
das Trainingsverfahren das iterative Ausführen der folgenden Schritte umfasst:
S11) basierend auf einer ersten anfänglichen Skelettsequenz (p_{m,c}), Berechnen einer ersten primären Bewegungsdarstellung (r1ₘ) mit dem Bewegungscodierer (ME), und Berechnen einer ersten primären Figurdarstellung (r1_{c}) mit dem Figurcodierer (CE);
S12) basierend auf einer zweiten anfänglichen Skelettsequenz (p_{m',c'}), die anders als die erste anfängliche Skelettsequenz ist, Berechnen einer zweiten primären Bewegungsdarstellung (r1_{m'}) mit dem Bewegungscodierer (ME), und Berechnen einer zweiten primären Figurdarstellung (r1_{c'}) mit dem Figurcodierer (CE);
S21) basierend auf der ersten primären Bewegungsdarstellung (r1ₘ) und der zweiten primären Figurdarstellung (r1_{c'}), Berechnen einer ersten primären Skelettsequenz (p1_{m,c}) mit dem Haltungssequenzdecodierer (PSD);
S22) basierend auf der zweiten primären Bewegungsdarstellung (r1_{m'}) und der ersten primären Figurdarstellung (r1_{c}), Berechnen einer zweiten primären Skelettsequenz (p1_{m',c}) mit dem Haltungssequenzdecodierer (PSD);
S31) basierend auf der ersten primären Skelettsequenz (p1_{m,c}), Berechnen einer ersten sekundären Bewegungsdarstellung (r2ₘ) mit dem Bewegungscodierer (ME), und Berechnen einer ersten sekundären Figurdarstellung (r2_{c}) mit dem Figurcodierer (CE);
S32) basierend auf der zweiten primären Skelettsequenz (p1_{m',c'}), Berechnen einer zweiten sekundären Bewegungs-darstellung (r2_{m'}) mit dem Bewegungscodierer (ME), und Berechnen einer zweiten sekundären Figurdarstellung (r2_{c'}) mit dem Figurcodierer (CE);
S41) basierend auf der ersten sekundären Bewegungsdarstellung (r2ₘ) und der zweiten sekundären Figurdarstellung (r2_{c'}), Berechnen einer ersten sekundären Skelettsequenz (p2_{m,c}) mit dem Haltungssequenzdecodierer (PSD);
S42) basierend auf der zweiten sekundären Bewegungsdarstellung (r2ₘ) und der ersten sekundären Figurdarstellung (r2_{c}), Berechnen einer zweiten sekundären Skelettsequenz (p2_{m',c'}) mit dem Haltungssequenzdecodierer (PSD);
S60) Aktualisieren der Parameter mindestens des Bewegungscodierers (ME) und/oder des Figurcodierers (CE), um Differenzen zwischen der ersten anfänglichen Skelettsequenz (p_{m,c}) und der ersten sekundären Skelettsequenz (p2_{m,c}) zu minimieren.

2. Computerumgesetztes Trainingsverfahren nach Anspruch 1, wobei jeder Bewegungscodiererblock mindestens eine Einheit zum Erlernen einer räumlichen Langzeit-Kurzzeit-Abhängigkeit (S-LSU) und eine Einheit zum Erlernen einer zeitlichen Langzeit-Kurzzeit-Abhängigkeit (T-LSU) umfasst.

3. Computerumgesetztes Trainingsverfahren nach Anspruch 1 oder 2, ferner umfassend einen Schritt S10:
S10) Identifizieren einer ersten anfänglichen Skelettsequenz (p_{m,c}), und einer zweiten anfänglichen Skelettsequenz (p_{m',c'}), so dass ein Abstand zwischen der ersten anfänglichen Skelettsequenz (p_{m,c}) und der zweiten anfänglichen Skelettsequenz (p_{m',c'}) über einer Schwelle liegt oder wahrscheinlich über einer Schwelle liegt.

4. Computerumgesetztes Trainingsverfahren nach einem der Ansprüche 1 bis 3, ferner umfassend folgende Schritte:
S43) basierend auf der ersten primären Bewegungsdarstellung (r1ₘ) und der ersten primären Figurdarstellung (r1_{c}), Berechnen einer ersten rekonstruierten Skelettsequenz (pr_{m,c});
S44) basierend auf der zweiten primären Bewegungsdarstellung (r1_{m'}) und der zweiten primären Figurdarstellung (r1_{c'}), Berechnen einer zweiten rekonstruierten Skelettsequenz (pr_{m',c'}); und
wobei während des Aktualisierungsschritts S60 die Parameter des Bewegungscodierers (ME), des Figurcodierers (CE) und/oder des Haltungssequenzdecodierers (PSD) aktualisiert werden, um Differenzen für mindestens eine der anfänglichen Skelettsequenzen zwischen der anfänglichen Skelettsequenz (p_{m,c}; p_{m',c'}) und der entsprechenden rekonstruierten Skelettsequenz (pr_{m,c}; pr_{m',c'}) zu minimieren.

5. Computerumgesetztes Trainingsverfahren nach einem der Ansprüche 1 bis 4, wobei während des Aktualisierungsschritts S60 die Parameter des Bewegungscodierers (ME), des Figurcodierers (CE) und/oder des Haltungssequenzdecodierers (PSD) aktualisiert werden, um die Differenzen:
- zwischen der ersten primären Bewegungsdarstellung (r1ₘ) und der ersten sekundären Bewegungsdarstellung (r2ₘ);
- zwischen der zweiten primären Bewegungsdarstellung (r1_{m'}) und der zweiten sekundären Bewegungsdarstellung (r2_{m'});
- zwischen der ersten primären Figurdarstellung (r1_{c}) und der ersten sekundären Figurdarstellung (r2_{c}); und/oder
- zwischen der zweiten primären Figurdarstellung (r1_{c'}) und der zweiten sekundären Figurdarstellung (r2_{c'})
zu minimieren.

6. Computerumgesetztes Trainingsverfahren nach einem der Ansprüche 1 bis 5, wobei während des Aktualisierungsschritts S60 die Parameter des Bewegungscodierers (ME), des Figurcodierers (CE) und/oder des Haltungssequenzdecodierers (PSD) aktualisiert werden, um die Differenzen:
- zwischen der ersten primären Bewegungsdarstellung (r1ₘ) und der zweiten sekundären Bewegungsdarstellung (r2_{m'});
- zwischen der zweiten primären Bewegungsdarstellung (r1_{m'}) und der ersten sekundären Bewegungsdarstellung (r2ₘ);
- zwischen der ersten primären Figurdarstellung (r1_{c}) und der zweiten sekundären Figurdarstellung (r2_{c'}); und/oder
- zwischen der zweiten primären Figurdarstellung (r1_{c'}) und der ersten sekundären Figurdarstellung (r2_{c})
zu maximieren.

7. Computerumgesetztes Trainingsverfahren nach einem der Ansprüche 1 bis 6, wobei
jede der anfänglichen Skelettsequenzen Gelenke umfasst; und
während des Aktualisierungsschritts S60 die Parameter des Bewegungscodierers (ME), des Figurcodierers (CE) und/oder des Haltungssequenzdecodierers (PSD) aktualisiert werden, um mindestens eine Summierung von Differenzen zwischen einer Geschwindigkeit eines Gelenks einer anfänglichen Skelettsequenz (p_{m,c}) und einer Geschwindigkeit des entsprechenden Gelenks einer entsprechenden berechneten sekundären Skelettsequenz (p2_{m,c}) zu minimieren.

8. Computerumgesetztes Trainingsverfahren nach einem der Ansprüche 1 bis 7, wobei der Bewegungscodierer (ME) dazu konfiguriert ist, eine 2D- oder 3D-Darstellung (rₘ) von bewegungsbezogenen Merkmalen einer Skelettsequenz basierend auf einer 2D-Skelettsequenz (p_{m,c}) oder einer 3D-Skelettsequenz (p_{m,c}) zu berechnen.

9. Computerumgesetztes Trainingsverfahren zum Trainieren eines Bewegungscodierers (ME), um eine Bewegungsdarstellung (rₘ), die eine Bewegung einer Person in einer Skelettsequenz (p_{m,c}) darstellt, basierend auf der Skelettsequenz (p_{m,c}) zu berechnen, und wahlweise zum Trainieren eines stromabwärtigen Aufgabendecodierers (DTD), um eine bewegungsbasierte Aufgabe basierend auf der Bewegungsdarstellung (rₘ) auszuführen, wobei
der Bewegungscodierer eine Vielzahl von Bewegungscodiererblöcken umfasst, die dazu konfiguriert sind, räumliche bzw. zeitliche mehrskalige Merkmale von Skelettsequenzen zu extrahieren;
ein Figurcodierer (CE) ein neuronales Faltungsnetzwerk ist, das mindestens vier zeitliche 1D-Faltungsschichten umfasst, wobei auf jede zeitliche 1D-Faltungsschicht eine zeitliche globale maximale Zusammenfassungsschicht folgt; wobei die zeitlichen 1D-Faltungsschichten stromabwärts mit einem Upsampling-Block verbunden sind, der dazu **konfiguriert** ist, eine Darstellung auszugeben, welche die gleiche Größe entlang einer zeitlichen Dimension wie die Bewegungsdarstellung aufweist;
ein Haltungssequenzdecodierer (PSD) ein neuronales Faltungsnetzwerk ist, das mindestens drei zeitliche 1D-Faltungsschichten umfasst, die stromabwärts mit einem Upsampling-Block verbunden sind;
einen stromabwärtigen Aufgabendecodierer (DTD), der ein neuronales Netzwerk ist, das dazu konfiguriert ist, die bewegungsbasierte Aufgabe auszuführen;
das Trainingsverfahren umfasst
A) Trainieren des Bewegungscodierers (ME) durch Umsetzen eines Trainingsverfahrens nach einem der Ansprüche 1 bis 8;
B) Feinabstimmen des Bewegungscodierers (ME) durch:
S110) basierend auf einer Skelettsequenz (p_{m,c}), Berechnen einer Bewegungsdarstellung (rₘ) mit dem Bewegungscodierer (ME);
S150) basierend auf der Bewegungsdarstellung (rₘ), Ausgeben einer Vorhersage mit dem stromabwärtigen Aufgabendecodierer (DTD);
S160) Aktualisieren der Parameter mindestens des Bewegungscodierers (ME), um die Differenzen zwischen der Vorhersage und einer Grundwahrheit, die der Skelettsequenz (p_{m,c}) entspricht, zu minimieren.

10. Computerumgesetztes Trainingsverfahren nach Anspruch 9, wobei die bewegungsbasierte stromabwärtige Aufgabe eine Aktionsklassifizierung ist.

11. Computerumgesetztes Verfahren zum Berechnen einer Bewegungsdarstellung (rₘ), die eine Bewegung einer Person darstellt, basierend auf einer Skelettsequenz (p_{m,c}), die eine Bewegung eines Skeletts der Person darstellt, wobei das Verfahren umfasst:
S210) basierend auf der Skelettsequenz (p_{m,c}), Berechnen einer Bewegungsdarstellung (rₘ) mit einem Bewegungscodierer (ME), der mit einem Trainingsverfahren nach einem der Ansprüche 1 bis 10 trainiert wird.

12. Computerumgesetztes Verfahren zum Durchführen einer bewegungsbasierten Aufgabe basierend auf einer Skelettsequenz (p_{m,c}), die eine Bewegung eines Skeletts der Person über einen Zeitraum darstellt, wobei das Verfahren umfasst:
S210) basierend auf der Skelettsequenz (p_{m,c}), Berechnen einer Bewegungsdarstellung (rₘ) mit einem Bewegungscodierer (ME);
S220) basierend auf der Bewegungsdarstellung (rₘ), Ausgeben einer Vorhersage mit einem stromabwärtigen Aufgabendecodierer (DTD);
wobei der Bewegungscodierer (ME) und der stromabwärtige Aufgabendecodierer (DTD) trainiert werden, um die bewegungsbasierte Aufgabe unter Verwendung eines Verfahrens nach Anspruch 9 oder 10 auszuführen.

13. Ein oder mehrere Computerprogramme (P), die Anweisungen umfassen, die, wenn die Anweisungen von einem oder mehreren Prozessoren (12) ausgeführt werden, bewirken, dass der Computer die Schritte des Verfahrens nach einem der Ansprüche 1 bis 12 durchführt.

14. Nicht vorübergehender, computerlesbarer Datenträger (11), auf dem das eine oder die mehreren Computerprogramme nach Anspruch 13 gespeichert sind.

15. System, umfassend einen oder mehrere Prozessoren (12) und einen nicht vorübergehenden, computerlesbaren Datenträger (11) nach Anspruch 14.

## Revendications

1. Procédé d'entraînement mis en œuvre par ordinateur pour entraîner un codeur de mouvement (ME) pour calculer une représentation de mouvement (rₘ) représentant un mouvement d'une personne sur la base d'une séquence de squelette (p_{m,c}) représentant un mouvement du squelette de la personne et/ou pour entraîner un codeur de caractère (CE) pour calculer une représentation de caractère (r_{c}) représentant des caractéristiques personnelles de la personne sur la base de la séquence de squelette (p_{m,c}), dans lequel,
le codeur de mouvement (ME) comprend une pluralité de blocs de codeur de mouvement configurés pour extraire respectivement des caractéristiques multiscalaires spatiales et temporelles des séquences de squelettes ;
le codeur de caractère (CE) est un réseau neuronal convolutif comprenant une pluralité de couches convolutives temporelles 1D ;
un décodeur de séquence de pose (PSD) est un réseau neuronal convolutif comprenant au moins trois couches convolutives temporelles 1D connectées en aval à un bloc de suréchantillonnage ;
le procédé d'entraînement comprend la réalisation itérative des étapes suivantes :
S11) sur la base d'une première séquence de squelette initiale (p_{m,c}), calculer une première représentation de mouvement primaire (r1ₘ) à l'aide du codeur de mouvement (ME) et calculer une première représentation de caractère primaire (r1_{c}) à l'aide du codeur de caractère (CE) ;
S12) sur la base d'une deuxième séquence de squelette initiale (p_{m',c'}) différente de la première séquence de squelette initiale, calculer une deuxième représentation de mouvement primaire (r1_{m'}) à l'aide du codeur de mouvement (ME) et calculer une deuxième représentation de caractère primaire (r1_{c'}) à l'aide du codeur de caractère (CE) ;
S21) sur la base de la première représentation de mouvement primaire (r1ₘ) et de la deuxième représentation de caractère primaire (r1_{c'}), calculer une première séquence de squelette primaire (p1_{m,c}) à l'aide du décodeur de séquence de pose (PSD) ;
S22) sur la base de la deuxième représentation de mouvement primaire (r1_{m'}) et de la première représentation de caractère primaire (r1_{c}), calculer une deuxième séquence de squelette primaire (p1_{m',c'}) à l'aide du décodeur de séquence de pose (PSD) ;
S31) sur la base de la première séquence de squelette primaire (p1_{m,c}), calculer une première représentation de mouvement secondaire (r2ₘ) à l'aide du codeur de mouvement (ME) et calculer une première représentation de caractère secondaire (r2_{c}) à l'aide du codeur de caractère (CE) ;
S32) sur la base de la deuxième séquence de squelette primaire (p1_{m',c'}), calculer une deuxième représentation de mouvement secondaire (r2_{m'}) à l'aide du codeur de mouvement (ME) et calculer une deuxième représentation de caractère secondaire (r2_{c'}) à l'aide du codeur de caractère (CE) ;
S41) sur la base de la première représentation de mouvement secondaire (r2ₘ) et de la deuxième représentation de caractère secondaire (r2_{c'}), calculer une première séquence de squelette secondaire (p2_{m,c}) à l'aide du décodeur de séquence de pose (PSD) ;
S42) sur la base de la deuxième représentation de mouvement secondaire (r2_{m'}) et de la première représentation de caractère secondaire (r2_{c}), calculer une deuxième séquence de squelette secondaire (p2_{m',c'}) à l'aide du décodeur de séquence de pose (PSD) ;
S60) mettre à jour les paramètres d'au moins le codeur de mouvement (ME) et/ou le codeur de caractère (CE) de manière à minimiser les différences entre la première séquence de squelette initiale (p_{m,c}) et la première séquence de squelette secondaire (p2_{m,c}).

2. Procédé d'entraînement mis en œuvre par ordinateur selon la revendication 1, dans lequel chaque bloc de codeur de mouvement comprend au moins une unité d'apprentissage de dépendance spatiale à court et long terme (S-LSU) et une unité d'apprentissage de dépendance temporelle à court et long terme (T-LSU).

3. Procédé d'entraînement mis en œuvre par ordinateur selon la revendication 1 ou 2 comprenant en outre une étape S10 suivante :
S10) identifier une première séquence de squelette initiale (p_{m,c}), et une deuxième séquence de squelette initiale (p_{m',c'}) de sorte qu'une distance entre la première séquence de squelette initiale (p_{m,c}) et la deuxième séquence de squelette initiale (p_{m',c'}) soit au-dessus d'un seuil ou soit susceptible d'être au-dessus d'un seuil.

4. Procédé d'entraînement mis en œuvre par ordinateur selon l'une quelconque des revendications 1 à 3, comprenant en outre les étapes suivantes :
S43) sur la base de la première représentation de mouvement primaire (r1ₘ) et de la première représentation de caractère primaire (r1_{c}), calculer une première séquence de squelette reconstruite (pr_{m,c}) ;
S44) sur la base de la deuxième représentation de mouvement primaire (r1_{m'}) et de la deuxième représentation de caractère primaire (r1_{c'}), calculer une deuxième séquence de squelette reconstruite (pr_{m',c'}) ; et
dans lequel, au cours de l'étape de mise à jour S60, pour au moins une des séquences de squelette initiales, les paramètres du codeur de mouvement (ME), du codeur de caractère (CE) et/ou du décodeur de séquence de pose (PSD) sont mis à jour de manière à minimiser les différences entre la séquence de squelette initiale (p_{m,c} ; p_{m',c'}) et la séquence de squelette reconstruite (pr_{m,c} ; pr_{m',c'}) correspondante.

5. Procédé d'entraînement mis en œuvre par ordinateur selon l'une quelconque des revendications 1 à 4, dans lequel, au cours de l'étape de mise à jour S60, les paramètres du codeur de mouvement (ME), du codeur de caractère (CE) et/ou du décodeur de séquence de pose (PSD) sont mis à jour de manière à minimiser les différences :
- entre la première représentation de mouvement primaire (r1ₘ) et la première représentation de mouvement secondaire (r2ₘ) ;
- entre la deuxième représentation de mouvement primaire (r1_{m'}) et la deuxième représentation de mouvement secondaire (r2_{m'}) ;
- entre la première représentation de caractère primaire (r1_{c}) et la première représentation de caractère secondaire (r2_{c}) ; et/ou
- entre la deuxième représentation de caractère primaire (r1_{c'}) et la deuxième représentation de caractère secondaire (r2_{c'}).

6. Procédé d'entraînement mis en œuvre par ordinateur selon l'une quelconque des revendications 1 à 5, dans lequel, au cours de l'étape de mise à jour S60, les paramètres du codeur de mouvement (ME), du codeur de caractère (CE) et/ou du décodeur de séquence de pose (PSD) sont mis à jour de manière à maximiser les différences :
- entre la première représentation de mouvement primaire (r1ₘ) et la deuxième représentation de mouvement secondaire (r2_{m'}) ;
- entre la deuxième représentation de mouvement primaire (r1_{m'}) et la première représentation de mouvement secondaire (r2ₘ) ;
- entre la première représentation de caractère primaire (r1_{c}) et la deuxième représentation de caractère secondaire (r2_{c'}) ; et/ou
- entre la deuxième représentation de caractère primaire (r1_{c'}) et la première représentation de caractère secondaire (r2_{c}).

7. Procédé d'entraînement mis en œuvre par ordinateur selon l'une quelconque des revendications 1 à 6, dans lequel
chacune des séquences de squelette initiales comprend des articulations ; et
au cours de l'étape de mise à jour S60, les paramètres du codeur de mouvement (ME), du codeur de caractère (CE) et/ou du décodeur de séquence de pose (PSD) sont mis à jour de manière à minimiser au moins une somme des différences entre une vitesse d'une articulation d'une séquence de squelette initiale (p_{m,c}) et une vitesse de l'articulation correspondante d'une séquence de squelette secondaire (p2_{m,c}) calculée correspondante.

8. Procédé d'entraînement mis en œuvre par ordinateur selon l'une quelconque des revendications 1 à 7, dans lequel le codeur de mouvement (ME) est configuré pour calculer une représentation (rₘ) 2D ou 3D des caractéristiques liées au mouvement d'une séquence de squelette, sur la base d'une séquence de squelette (p_{m,c}) 2D ou d'une séquence de squelette (p_{m,c}) 3D.

9. Procédé d'entraînement mis en œuvre par ordinateur pour entraîner un codeur de mouvement (ME) pour calculer une représentation de mouvement (rₘ) représentant un mouvement d'une personne dans une séquence de squelette (p_{m,c}) sur la base de la séquence de squelette (p_{m,c}), et facultativement pour entraîner un décodeur de tâche en aval (DTD) pour réaliser une tâche basée sur le mouvement sur la base de ladite représentation de mouvement (rₘ), dans lequel,
le codeur de mouvement comprend une pluralité de blocs de codeur de mouvement configurés pour extraire respectivement des caractéristiques multiscalaires spatiales et temporelles des séquences de squelettes ;
un codeur de caractère (CE) est un réseau neuronal convolutif comprenant au moins quatre couches convolutives temporelles 1D, chaque couche convolutive temporelle 1D étant suivie d'une couche de max-pooling [sous-échantillonnage par conservation de valeur maximale] global temporel ; les couches convolutives temporelles 1D étant connectées en aval à un bloc de suréchantillonnage configuré pour délivrer une représentation ayant la même taille que la représentation de mouvement le long d'une dimension temporelle ;
un décodeur de séquence de pose (PSD) est un réseau neuronal convolutif comprenant au moins trois couches convolutives temporelles 1D connectées en aval à un bloc de suréchantillonnage ;
un décodeur de tâche en aval (DTD) est un réseau neuronal configuré pour réaliser la tâche basée sur le mouvement ;
le procédé d'entraînement comprend
A) l'entraînement du codeur de mouvement (ME) en mettant en œuvre un procédé d'entraînement selon l'une quelconque des revendications 1 à 8 ;
B) le réglage fin du codeur de mouvement (ME) :
S110) en calculant une représentation de mouvement (rₘ) à l'aide du codeur de mouvement (ME) sur la base d'une séquence de squelette (p_{m,c}) ;
S150) en délivrant une prédiction à l'aide du décodeur de tâche en aval (DTD) sur la base de la représentation de mouvement (rₘ) ;
S160) en mettant à jour des paramètres d'au moins le codeur de mouvement (ME) de manière à minimiser les différences entre la prédiction et une donnée de réalité de terrain correspondant à la séquence de squelette (p_{m,c}).

10. Procédé d'entraînement mis en œuvre par ordinateur selon la revendication 9, dans lequel la tâche en aval basée sur le mouvement est une classification d'actions.

11. Procédé mis en œuvre par ordinateur pour calculer une représentation de mouvement (rₘ) représentant un mouvement d'une personne sur la base d'une séquence de squelette (p_{m,c}) représentant un mouvement du squelette de la personne, le procédé comprenant l'étape suivante :
S210) sur la base de la séquence de squelette (p_{m,c}), calculer une représentation de mouvement (rₘ) à l'aide d'un codeur de mouvement (ME) entraîné par un procédé d'entraînement selon l'une quelconque des revendications 1 à 10.

12. Procédé mis en œuvre par ordinateur pour effectuer une tâche basée sur le mouvement sur la base d'une séquence de squelette (p_{m,c}) représentant un mouvement du squelette de la personne sur une période de temps, le procédé comprenant les étapes suivantes :
S210) sur la base de la séquence de squelette (p_{m,c}), calculer une représentation de mouvement (rₘ) à l'aide d'un codeur de mouvement (ME) ;
S220) sur la base de la représentation de mouvement (rₘ), délivrer une prédiction à l'aide d'un décodeur de tâche en aval (DTD) ;
le codeur de mouvement (ME) et le décodeur de tâche en aval (DTD) étant entraînés pour réaliser la tâche basée sur le mouvement en utilisant un procédé selon la revendication 9 ou 10.

13. Un ou plusieurs programmes informatiques (P) comprenant des instructions qui, lorsqu'elles sont exécutées par un ou plusieurs processeurs (12), amènent l'ordinateur à effectuer les étapes du procédé selon l'une quelconque des revendications 1 à 12.

14. Support non transitoire lisible par ordinateur (11) sur lequel sont stockés un ou plusieurs programmes informatiques selon la revendication 13.

15. Système comprenant un ou plusieurs processeurs (12) et un support non transitoire lisible par ordinateur (11) selon la revendication 14.
